# EUROPÄISCHE PATENTSCHRIFT

(11) **EP 2 122 431 B1**
(45) Veröffentlichungstag und Bekanntmachung des Hinweises auf die Patenterteilung: **24.07.2019**
(21) Anmeldenummer: 07857030.6
(22) Anmeldetag: 21.12.2007
(51) Int. Cl.: G05D 1/02

(54) **SYSTEM, INSBESONDERE FAHRERLOSES TRANSPORTFAHRZEUG**
SYSTEM, PARTICULARLY DRIVERLESS TRANSPORT VEHICLE
SYSTÈME DE TRANSPORT, EN PARTICULIER VÉHICULE DE TRANSPORT SANS CONDUCTEUR

(30) Priorität: 10.01.2007 DE 102007002242
(43) Veröffentlichungstag der Anmeldung: 25.11.2009
(73) Patentinhaber: SEW-EURODRIVE GmbH & Co. KG, 76646 Bruchsal (DE)
(72) Erfinder: SCHWESINGER, Klaus, 76646 Bruchsal (DE); BECKER, Günter, 76684 Östringen (DE); THOME, Markus, 76646 Bruchsal (DE)
(86) Internationale Anmeldenummer: PCT/EP2007/011307
(87) Internationale Veröffentlichungsnummer: WO 2008/083828

(56) Entgegenhaltungen:
- EP-A- 1 243 499
- FR-A- 2 449 578
- US-A- 4 077 486
- US-A- 4 279 563
- US-A- 4 515 235

## Beschreibung

Die Erfindung betrifft ein System zum Transport von Lasten auf welligem Untergrund.

Es ist bekannt, dass bei Automobilen Räder gleichzeitig als Antriebsräder verwendet werden. Dabei ist die Normalkraft lastabhängig.

Aus der FR 2 449 578 A ist ein batteriebetriebenes Transportfahrzeug mit automatischer Spurführung als nächstliegender Stand der Technik bekannt.

Aus der US 4 515 235 A ist ein fahrerloses geführtes Transportfahrzeug bekannt.

Aus der US 4 279 563 A ist ein unbemanntes Material-Handling-System bekannt.

Aus der US 4 077 486 A ist eine Leistungssteuereinheit für einen Lift-Transporter bekannt.

Der Erfindung liegt daher die Aufgabe zugrunde, ein System, insbesondere fahrerloses Transportfahrzeug, weiterzubilden, wobei das System auf verschiedenen Untergründen gut verwendbar sein soll.

Erfindungsgemäß wird die Aufgabe bei dem System nach den in Anspruch 1 angegebenen Merkmalen gelöst.

Wichtige Merkmale der Erfindung bei dem System sind, dass es, insbesondere ein fahrerloses Transportfahrzeugsystem, zum Transport von Lasten auf welligem Untergrund, insbesondere Boden, geeignet ausgeführt ist,
wobei es zumindest einen Primärleiter und ein daraus berührungslos versorgbares Fahrzeug umfasst, welches eine mit dem Primärleiter induktiv gekoppelte Sekundärspule umfasst,
wobei der Sekundärspule eine Kapazität derart zugeordnet ist, dass die zugehörige Resonanzfrequenz im Wesentlichen der Mittelfrequenz, insbesondere zwischen 10 und 100 kHz, des in den Primärleiter eingeprägten Stromes entspricht,
**wobei** zwischen der Antriebseinheit, umfassend jeweiliges Antriebsrad und zugehöriger Antrieb, und dem Gestänge des Fahrzeuges ein Federmittel angeordnet ist.

Von Vorteil ist dabei, dass einerseits der Wirkungsgrad der Energieversorgung abstandsunabhängig ausgeführt ist und andererseits die Kraftübertragung. Denn wenn Wellen am Boden auftreten, ändert sich der Abstand zum Gestänge des Fahrzeuges, über seine Räder in einer definierten Lage zum Boden sich befindet. Da bei der Energieübertragung aber ein Schwingkreis sekundärseitig angeordnet ist, ist eine weitgehende Unabhängigkeit vom Abstand erreicht. Auch für die Antriebskraft ist dies erreicht, weil die Federmittel etwa auftretende Abstandsänderungen derart ausgleichen, dass sie die Antriebseinheit auf den Untergrund hin drücken und diese somit einen konstanten Abstand hat. Außerdem ist nicht nur der Abstand konstant einhaltbar sondern auch die Andruckkraft des Antriebsrades an den Boden, also die Normalkraft. Solange die Welligkeit unter einem kritischen Wert bleibt, ist die Normalenrichtung im Wesentlichen parallel zur Anpresskraftrichtung und Federkraftrichtung.

Erfindungsgemäß ist die Sekundärspule mit dem Gestänge verbunden. Von Vorteil ist dabei, dass sie fest und sicher verbindbar ist und die Masse der Antriebseinheiten möglichst gering haltbar ist.

Bei einer vorteilhaften Ausgestaltung sind am Gestänge Räder angeordnet, insbesondere mit fester Beabstandung zum Gestänge. Von Vorteil ist dabei, dass das Gestänge mittels der Räder auf dem Untergrund bewegbar, insbesondere rollbar, angeordnet ist und somit die Gewichtskraft des Fahrzeuges und der Last hierüber an den Untergrund abführbar ist abzüglich der Summe der im Wesentlichen konstanten Normalkraft der Antriebsräder.

Bei einer vorteilhaften Ausgestaltung weist das Fahrzeug eine Steuereinheit und/oder Spurführmittel auf. Von Vorteil ist dabei, dass das Fahrzeug zwar in alle Richtungen über dem Boden bewegbar ist, jedoch die Bewegung vorteiligerweise entlang der Primärleiter ausführbar ist. Denn die Spurführmittel ermöglichen das Erkennen der Primärleiter und somit der gewünschten Fahrbahn und Fahrtrichtung. Die Steuereinheit regelt davon abhängig die Orientierung des Fahrzeuges derart, dass es entlang des Primärleiters verfahrbar ist, der vorzugsweise langgestreckt und linienhaft verlegt ist.

Bei einer vorteilhaften Ausgestaltung ist zum Datenaustausch zwischen der Steuereinheit und einer stationären Einheit eine mit dem Primärleiter induktiv gekoppelt angeordnete erste Spule verwendet. Von Vorteil ist dabei, dass auf den Primärleiterstrom höherfrequent aufmodulierte Stromsignale zur Datenübertragung verwendbar sind, insbesondere in bidirektionaler Weise.

Bei einer vorteilhaften Ausgestaltung ist als erste Spule die Sekundärspule, ein Teilwicklungsbereich der Sekundärspule und/oder eine Sensorspule eines Spurführungsmittels verwendet. Von Vorteil ist dabei, dass keine zusätzliche Vorrichtung notwendig ist sondern die sowieso schon vorhandenen Mittel nutzbar sind.

Bei einer vorteilhaften Ausgestaltung umfasst die Last elektrische Verbraucher und/oder Bauelemente und ist mit Energie und/oder Information aus dem Fahrzeug versorgbar. Von Vorteil ist dabei, dass auch Lasten transportierbar sind, die während des Transportweges mit Energie und/oder Information versorgt werden müssen, beispielsweise während des Transportes in einer Fertigungslinie oder Qualitätsprüfanlage.

Bei einer vorteilhaften Ausgestaltung erzeugt das Federmittel Federkraft in im Wesentlichen Normalenrichtung des Untergrundes. Von Vorteil ist dabei, dass die lastabhängige Gewichtskraft im Wesentlichen über die Räder ableitbar ist und die Antriebseinheit nur auf die Normalkraft hin auszulegen ist und somit die Welle dünn und massearm gestaltbar ist.

Bei einer vorteilhaften Ausgestaltung ist das Federmittel derart angeordnet und ausgeführt, dass die zwischen Antriebsrad und Untergrund wirkende Normalkraft im Wesentlichen konstant haltbar ist, insbesondere die Welligkeit des Bodens unter einem kritischen Wert bleibt. Von Vorteil ist dabei, dass die durch Reibschluss übertragene Antriebskraft lastunabhängig bleibt. Also wird mit oder ohne Last die gleiche Normalkraft wirksam und somit sind die Eingriffsbedingungen gut kontrollierbar.

Bei einer vorteilhaften Ausgestaltung sind mindestens zwei Antriebsräder vorgesehen, deren Drehzahl unabhängig voneinander vorgebbar ist, insbesondere von der Steuereinheit. Von Vorteil ist dabei, dass sogar ein Auf-der-Stelle-Drehen, also ein Drehen mit Wendekreisradius Null, ausführbar ist. Somit hat das Fahrzeug eine hohe Wendigkeit.

Erfindungsgemäß ist die Sekundärspule näher am Boden angeordnet als die Antriebe der Antriebsräder zum Staub- und/oder Spritz-Schutz für das Gestänge und/oder die Antriebe. Von Vorteil ist dabei, dass die Sekundärspule flach ausführbar ist und durch sie ein großer Bereich der Unterseite des Fahrzeuges abdeckbar ist. Insbesondere ist sie breiter als der Abstand zwischen Hinleiter und Rückleiter der Primärleiterschleife ausführbar und somit auch zumindest Bereiche der Unterseite der Antriebe abdeckbar. Weitere Vorteile ergeben sich aus den Unteransprüchen.

Die Erfindung wird nun anhand von Abbildungen näher erläutert:

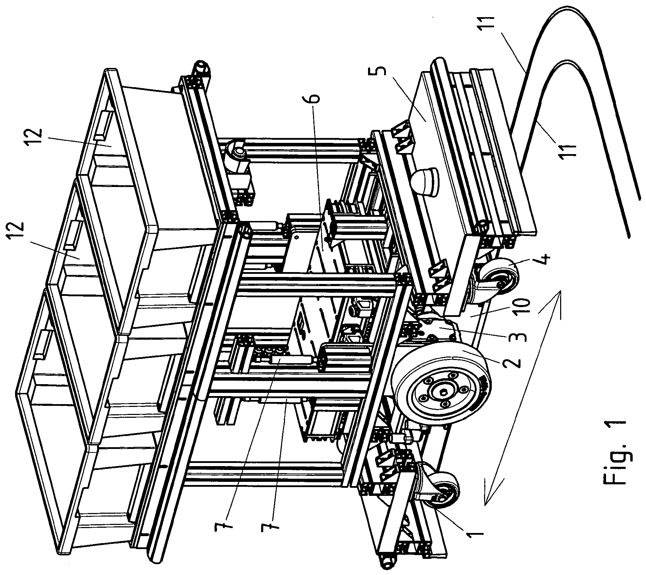

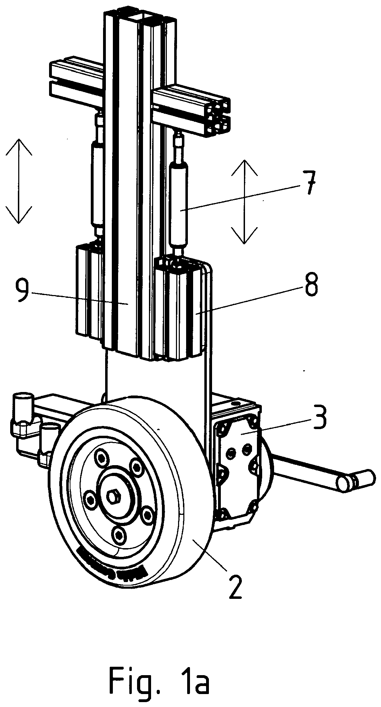

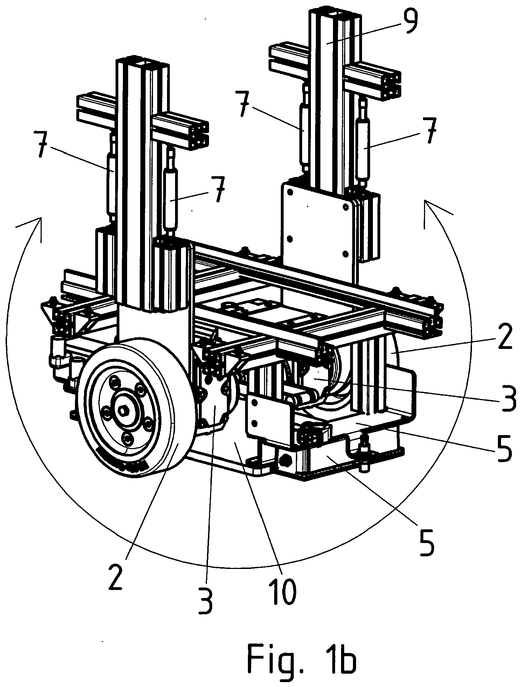

In der Figur 1 ist eine erfindungsgemäße Vorrichtung gezeigt. In Figur 1a ist der Teilbereich der federnden Aufhängung des Antriebrades 2 mit seinem Antrieb näher dargestellt. In Figur 1b ist ein Teilbereich gezeigt, der beide Antriebsräder mit ihren jeweiligen Antrieben zeigt.

Das erfindungsgemäße Fahrzeug weist dabei Räder (1,4) auf, die ein Fahren auf einem Boden ermöglichen.

Der Antrieb in Fahrtrichtung wird durch mindestens zwei Antriebsräder 2 bewirkt, die jeweils einen eigenen Antrieb, umfassend zumindest einen Elektromotor, aufweisen. Die Elektromotoren sind aus einer Steuereinheit 6 versorgbar, die auch die Steuerung für das Fahrzeug umfasst. Dabei ist die Drehzahl jedes Antriebsrades unabhängig vorgebbar und somit die Fahrtrichtung entsprechend beeinflussbar.

Des Weiteren weist das Fahrzeug Spurführmittel 5 auf, die Sensorspulen umfassen. Im Boden ist zumindest ein langgestreckter Primärleiter verlegt, in den ein mittelfrequenter Strom eingespeist wird von einer stationären Versorgungseinheit. In dem Beispiel nach Figur 1 ist der Primärleiter als Schleife verlegt, wobei ein hinleitender und ein rückleitender Bereich des Primärleiters 11 gezeigt ist, die beide zueinander parallel verlegt sind. Dabei ist eine 90° Kurve ausgeführt. Die Primärleiter sind entweder in einer Ausnehmung des Bodens vorgesehen oder es wird auf dem Boden eine überfahrbare Kabelbrücke verlegt, die den Primärleiter schützend umgibt und aufnimmt.

Das Fahrzeug weist an seiner unteren, dem Boden zugewandten Seite eine Pick-Up-Einheit 10 auf, die eine Sekundärspule umfasst, welche induktiv gekoppelt mit dem Primärleiter ist.

Der Sekundärspule ist eine Kapazität derart in Reihe und/oder parallel zugeschaltet, dass die zugehörige Resonanzfrequenz im Wesentlichen der Mittelfrequenz entspricht. Somit sind auch bei Änderungen des Abstandes zwischen Sekundärspule und Primärleiter nur geringfügige Einbußen an Wirkungsgrad bei der berührungslosen Energieübertragung zur Versorgung des Fahrzeuges vorhanden.

Hierdurch ist das Fahrzeug auch für einen Boden geeignet, der nicht eben ist sondern Welligkeiten unterhalb eines kritischen Maßes aufweist. Denn selbst wenn Welligkeiten den Abstand verändern, bleibt die Energieversorgung im Wesentlichen konstant.

Das Fahrzeug muss somit keine oder nur geringfügige Energiepuffer aufweisen. Die Größe der Energiepuffer ist abhängig von der Welligkeit des Bodens.

Um gleichzeitig eine herausragende Wendigkeit des Fahrzeuges, also gute Lenkbarkeit, zu erreichen und trotzdem eine im Wesentlichen gleichmäß0ige Vortriebskraft in Fahrtrichtung zu erreichen sind die Antriebsräder am Gestänge 9 des Fahrzeuges nicht fest verbunden sondern über Federmittel 7, deren Federkraft die Antriebsräder 2 jeweils im Wesentlichen in Richtung des Bodens drücken. Da jedem Antriebsrad 2 ein Federmittel 7 zugeordnet ist, ist eine im Wesentlichen gleichbleibende Normalkraft des Antriebsrades zum Boden hin erreichbar. Dies gilt bis auf geringfügige Abweichungen auch bei welligem Boden.

Die Federmittel 7 sind zwischen dem Gestänge 9 und der Radantriebseinheit angeordnet. Diese umfasst dabei zumindest das Antriebsrad 2 und seinen zugeordneten Antrieb 3. Außerdem ist ein Lagerkörper 8 umfasst, der gleitgelagert an einem Teilbereich des Gestänges 9 angeordnet ist. Statt einer solchen Gleitlagerung sind auch andere gleichwirkende Mittel verwendbar.

Zur Spurführung ist ein Spurführmittel 5 vorgesehen, welches zumindest eine Sensorspule umfasst, die das magnetische Wechselfeld der Primärleiter detektierbar macht. Die Steuereinheit regelt entsprechend der Sensorsignale die Fahrtrichtung auf den Sollwert hin. Der Sollwert ist beispielsweise das lokale Minimum des gemittelten Betrages des Magnetfeldes, wobei dieses Minimum der symmetrischen Positionierung des Fahrzeuges bezüglich der Hinleitung und der Rückleitung entspricht. Im einfachsten Fall wird also als Stellgröße die Drehzahlabweichung der beiden Antriebsräder 2 verwendet und diese somit abhängig von der detektierten Abweichung der detektierten Magnetfeldwerte zum Sollwert gestellt. Als Regler sind P Regler, PI Regler oder auch PID Regler mit oder ohne Vorsteuerung verwendbar. Eine verbesserte Spurführung ist erreichbar bei Verwendung mehrerer voneinander beabstandeter Sensorspulen. Dementsprechend ist dann die Regelung angepasst.

Die Steuereinheit ist zum Informationsaustausch mit einer stationären Rechnereinheit vorgesehen. Dazu wird von der Versorgungseinheit auf den mittelfrequenten Primärstrom ein höher frequenter Strom aufgeprägt und am Fahrzeug eine induktiv gekoppelte Spule zum Empfang dieser Signale vorgesehen. Diese Spule ist entweder als separate Spule ausgeführt und am Fahrzeug angeordnet. Sie kann aber auch als Teilbereich der Sekundärspule vorgesehen werden oder es wird die Sekundärspule selbst hierzu verwendet. In einem weiteren erfindungsgemäßen Ausführungsbeispiel ist auch eine Sensorspule des Spurführmittels 5 verwendbar.

Das Fahrzeug ist als fahrerloses Transportfahrzeug ausführbar. Die Last 12 ist beispielsweise an der oberen Seite des Fahrzeuges vorsehbar.

### Bezugszeichenliste

1 Rad
2 Antriebsrad
3 Antrieb für Antriebsrad
4 Rad
5 Spurführmittel
6 Steuereinheit
7 Federmittel
8 Lagerkörper
9 Gestänge
10 Pick-Up-Einheit
11 Primärleiter
12 Last

## Patentansprüche

1. System zum Transport von Lasten auf welligem Untergrund,
umfassend zumindest einen Primärleiter (11) und ein daraus berührungslos versorgbares Fahrzeug, welches eine mit dem Primärleiter (11) induktiv gekoppelte Sekundärspule zur Versorgung des Fahrzeugs umfasst,
**dadurch gekennzeichnet, dass**
der Sekundärspule eine Kapazität derart zugeordnet ist, dass die zugehörige Resonanzfrequenz der Mittelfrequenz des in den Primärleiter (11) eingeprägten Stromes entspricht,
wobei zwischen einer Antriebseinheit, umfassend ein jeweiliges Antriebsrad (2) und einen zugehörigen Antrieb (3), und einem Gestänge (9) des Fahrzeuges ein Federmittel (7) angeordnet ist,
wobei am Gestänge (9) Räder (1, 4) mit fester Beabstandung zum Gestänge (9) angeordnet sind,
wobei das Federmittel (7) Federkraft in Normalenrichtung des Untergrundes erzeugt,
wobei das Federmittel (7) derart angeordnet und ausgeführt ist, dass die zwischen Antriebsrad (2) und Untergrund wirkende Normalkraft konstant haltbar ist,
wobei mindestens zwei Antriebsräder (2) vorgesehen sind, deren Drehzahl von einer Steuereinheit (6) unabhängig voneinander vorgebbar ist.
wobei die Sekundärspule mit dem Gestänge (9) verbunden ist und die Sekundärspule zum Staub- und/oder Spritz-Schutz für das Gestänge (9) und/oder die Antriebe (3) näher am Boden angeordnet ist als die Antriebe der Antriebsräder (2).

2. System nach Anspruch 1,
**dadurch gekennzeichnet, dass**
das System ein fahrerloses Transportfahrzeug ist.

3. System nach Anspruch 1 oder 2,
**dadurch gekennzeichnet, dass**
ein hinleitender und ein rückleitender Bereich des Primärleiters (11) zueinander parallel verlegt sind, wobei die Sekundärspule breiter als der Abstand zwischen diesen beiden Bereichen ausgeführt ist.

4. System nach mindestens einem der vorangegangenen Ansprüche,
**dadurch gekennzeichnet, dass**
das Fahrzeug eine Steuereinheit (6) und/oder Spurführmittel (5) aufweist.

5. System nach mindestens einem der vorangegangenen Ansprüche,
**dadurch gekennzeichnet, dass**
zum Datenaustausch zwischen der Steuereinheit (6) und einer stationären Einheit eine mit dem Primärleiter (11) induktiv gekoppelt angeordnete erste Spule verwendet ist.

6. System nach mindestens einem der vorangegangenen Ansprüche,
**dadurch gekennzeichnet, dass**
als erste Spule die Sekundärspule, ein Teilwicklungsbereich der Sekundärspule und/oder eine Sensorspule eines Spurführungsmittels verwendet ist.

7. System nach mindestens einem der vorangegangenen Ansprüche,
**dadurch gekennzeichnet, dass**
die Last (12) elektrische Verbraucher und/oder Bauelemente umfasst und mit Energie und/oder Information aus dem Fahrzeug versorgbar ist.

## Claims

1. A system for transporting loads on an undulating surface,
comprising at least one primary conductor (11) and a vehicle which can be supplied therefrom in contactless manner which comprises a secondary coil, inductively coupled with the primary conductor (11), for supplying the vehicle,
**characterised in that**
a capacitor is associated with the secondary coil such that the associated resonant frequency corresponds to the medium frequency of the current injected into the primary conductor (11),
wherein a spring means (7) is arranged between a drive unit, comprising a respective drive wheel (2) and an associated drive (3), and a linkage (9) of the vehicle,
wherein wheels (1, 4) with a fixed spacing from the linkage (9) are arranged on the linkage (9),
wherein the spring means (7) generates spring force in the normal direction of the surface,
wherein the spring means (7) is arranged and embodied such that the normal force acting between the drive wheel (2) and surface can be kept constant,
wherein at least two drive wheels (2) are provided, the speed of rotation of which can be specified by a control unit (6) independently of each other.
wherein the secondary coil is connected to the linkage (9) and the secondary coil for protection against dust and/or splashing for the linkage (9) and/or the drives (3) is arranged closer to the ground than the drives of the drive wheels (2).

2. A system according to Claim 1,
**characterised in that**
the system is a driverless transport vehicle.

3. A system according to Claim 1 or 2,
**characterised in that**
a forward and a return region of the primary conductor (11) are laid parallel to one another, the secondary coil being embodied wider than the distance between these two regions.

4. A system according to at least one of the preceding claims,
**characterised in that**
the vehicle has a control unit (6) and/or track guidance means (5).

5. A system according to at least one of the preceding claims,
**characterised in that**
a first coil arranged inductively coupled with the primary conductor (11) is used for data exchange between the control unit (6) and a stationary unit.

6. A system according to at least one of the preceding claims,
**characterised in that**
the secondary coil, a part-winding region of the secondary coil and/or a sensor coil of a track guidance means is used as the first coil.

7. A system according to at least one of the preceding claims,
**characterised in that**
the load (12) comprises electrical consumers and/or components and can be supplied with energy and/or information from the vehicle.

## Revendications

1. Système destiné au transport de charges sur un soubassement ondulé, comprenant au moins un conducteur primaire (11) et un véhicule pouvant être alimenté sans contact à partir de celui-ci, et qui comprend une bobine secondaire couplée par induction au conducteur primaire (11) afin d'alimenter le véhicule,
**caractérisé en ce qu'**un condensateur est associé à la bobine secondaire de telle sorte que la fréquence de résonance associée corresponde à la fréquence moyenne du courant injecté dans le conducteur primaire (11),
sachant qu'un moyen formant ressort (7) est disposé entre une unité d'entraînement, comprenant une roue motrice respective (2) et un entraînement associé (3), et une tringlerie (9) du véhicule,
sachant que des roues (1, 4) sont disposées sur la tringlerie (9) à distance fixe de la tringlerie (9),
sachant que le moyen formant ressort (7) produit une force de ressort en direction normale au soubassement,
sachant que le moyen formant ressort (7) est disposé et réalisé de telle sorte que la force normale agissant entre la roue motrice (2) et le soubassement peut être maintenue constante,
sachant qu'il est prévu au moins deux roues motrices (2), dont les vitesses de rotation peuvent être prescrites indépendamment l'une de l'autre par une unité de commande (6), sachant que la bobine secondaire est reliée à la tringlerie (9) et que la bobine secondaire, pour la protection contre la poussière et/ou les projections pour la tringlerie (9) et/ou les entraînements (3), est disposée plus près du sol que les entraînements des roues motrices (2).

2. Système selon la revendication 1, **caractérisé en ce que** le système est un véhicule de transport sans conducteur.

3. Système selon la revendication 1 ou 2, **caractérisé en ce qu'**une région de conduction aller et une région de conduction de retour du conducteur primaire (11) sont posées parallèlement entre elles, sachant que la bobine secondaire est réalisée plus large que la distance entre ces deux régions.

4. Système selon au moins une des revendications précédentes, **caractérisé en ce que** le véhicule présente une unité de commande (6) et/ou des moyens de guidage (5).

5. Système selon au moins une des revendications précédentes, **caractérisé en ce qu'**on utilise pour l'échange de données entre l'unité de commande (6) et une unité stationnaire une première bobine disposée en étant couplée par induction au conducteur primaire (11).

6. Système selon au moins une des revendications précédentes, **caractérisé en ce qu'**on utilise comme première bobine la bobine secondaire, une région d'enroulement partiel de la bobine secondaire et/ou une bobine de détection d'un moyen de guidage.

7. Système selon au moins une des revendications précédentes, **caractérisé en ce que** la charge (12) comprend des composants et/ou des consommateurs électriques et peut être alimentée en énergie et/ou en informations à partir du véhicule.
